# EUROPEAN PATENT SPECIFICATION

(11) **EP 4 166 828 B1**
(45) Date of publication and mention of the grant of the patent: **10.09.2025**
(21) Application number: 21822993.8
(22) Date of filing: 08.06.2021
(51) Int. Cl.: F16K 15/14, F16K 27/00, F16L 41/02, B60S 1/48, F16K 11/02

(54) **CHECK VALVE, CHECK VALVE-EQUIPPED BRANCHING TOOL, AND CLEANER DEVICE**
RÜCKSCHLAGVENTIL, VERZWEIGUNGSWERKZEUG MIT RÜCKSCHLAGVENTIL UND REINIGUNGSVORRICHTUNG
CLAPET DE NON-RETOUR, OUTIL DE BRANCHEMENT ÉQUIPÉ D'UN CLAPET DE NON-RETOUR ET DISPOSITIF DE NETTOYAGE

(30) Priority: 10.06.2020 JP 2020101201; 10.06.2020 JP 2020101202
(43) Date of publication of application: 19.04.2023
(73) Proprietor: KOITO MANUFACTURING CO., LTD., Minato-ku Tokyo 108-8711 (JP)
(72) Inventor: MATSUNAGA, Takahiro, Shizuoka-shi Shizuoka 424-8764 (JP); SAKAI, Masaru, Shizuoka-shi Shizuoka 424-8764 (JP); ICHIKAWA, Yasuhiro, Shizuoka-shi Shizuoka 424-8764 (JP)
(74) Representative: Algemeen Octrooi- en Merkenbureau B.V.
(86) International application number: PCT/JP2021/021727
(87) International publication number: WO 2021/251377

(56) References cited:
- EP-A1- 0 014 838
- DE-A1- 102005 056 524
- JP-A- 2012 501 890
- JP-B2- S 598 711
- JP-U- H02 141 357
- JP-Y2- H0 348 923
- US-B2- 8 905 327

## Description

### [TECHNICAL FIELD]

The present invention relates to a check valve as defined in the preamble of claim 1 and a cleaner device equipped with this check valve as defined in claim 4.

### [BACKGROUND ART]

In the related art, vehicle cleaner systems for cleaning sensors mounted on vehicles such as cameras are known (see, e.g., Patent Literature 1). The cleaner systems are equipped with multiple nozzles, and various devices can be cleaned by spraying of a cleaning solution from each nozzle. These nozzles are connected to a tank for the cleaning solution and a pump via pipelines. The pipelines have branched portions for branching to each nozzle. The branched portions are provided with check valves for preventing backflow of the cleaning solution back to the tank.
[Patent Literature 1] PCT International Publication No. WO2018/230558
[Patent Literature 2] US 8905327 B2 discloses a check valve according to the preamble of claim 1;
[Patent Literature 3] DE 10 2005 056524 A1 also discloses a check valve according to the preamble of claim 1;
[Patent Literature 4] EP 0014838 A1 discloses a valve with one inlet and two outlet orifices, in which valve the inlet orifice can be shut off from both outlet orifices and the two outlet orifices from one another by means of a single closing member.

### [SUMMARY OF INVENTION]

### [TECHNICAL PROBLEM]

The inventors of the present invention have examined the above-mentioned vehicle cleaner systems and have come to recognize the following problems. For example, water droplets may adhere to the surface of a check valve due to condensation caused by changes in the temperature and humidity of the ambient environment. Ingress of the adhered water droplets into the check valve may adversely affect the operation of the check valve.

In this background, one of exemplary purposes of the present invention is to suppress the ingress of water into the inside of a check valve for incorporation in a cleaner device.

Further, the inventors of the present invention have examined the above-mentioned vehicle cleaner systems and have come to recognize the following problems. When one nozzle is connected to another nozzle via a pipeline and a branched portion, cleaning fluid (e.g., cleaning solution) that has flowed due to the cleaning operation of the cleaner system can remain in a channel connecting these nozzles when the cleaning operation is ended. Thereafter, even when the cleaner system is not in operation, external vibrations, shocks, or other factors may cause this remaining cleaning fluid to move along the channel and some of the cleaning fluid to be leaked from one of the nozzles. However, such leakage is not intended behavior and is not desired. It may be desirable to lessen or prevent such leakage, not only in vehicle cleaner systems, but also in other general purpose cleaner devices as well.

In this background, one of exemplary purposes of the present invention is to suppress the movement of cleaning fluid inside a channel when a cleaner device is not in operation.

### [SOLUTION TO PROBLEM]

One embodiment of the present invention relates to a check valve for incorporation in a cleaner device as defined by the characterizing part of claim 1. The check valve includes: a main unit provided with an inflow channel and at least one outflow channel; a sealing member that allows a flow of cleaning fluid from the inflow channel to the outflow channel when the cleaner device is in operation and that is formed to seal a backflow of the cleaning fluid from the outflow channel to the inflow channel when the cleaner device is not in operation. The lid member has a communication hole that allows the housing chamber to communicate with an outside of the housing chamber. The lid member or the main unit is provided with a water receiving recess arranged around the communication hole.

If the movement of the sealing member inside the check valve associated with the operation of the cleaner device or changes in environmental temperature/humidity causes excessive pressure changes in the housing chamber for the sealing member, these pressure changes can interfere with the proper opening and closing operation of the sealing member. However, as long as the housing chamber for the sealing member communicates with the outside, the pressure changes in the housing chamber are released to the outside air, and excessive pressure changes are thus suppressed. Further, when water droplets (for example, due to condensation) enter through the communication hole, the operation of the sealing member may be hindered. However, since the water receiving recess is provided around the communicating hole, even if water droplets attached to the surface of the main unit or the lid member approach the communicating hole, the water droplets are blocked by being received by the water receiving recess. The ingress of water into the housing chamber, i.e., the inside of the check valve can be inhibited.

The water receiving recess may extend in a groove shape around the communication hole. Such arrangement of the water receiving recess increases the possibility of a water droplet entering the water receiving recess before reaching the communication hole when the water droplet flows toward the communication hole from the surroundings. Thus, the approach of the water droplet to the communication hole and even the ingress of water into the check valve are controlled more favorably.

The lid member may form a bottom surface of the check valve having a central part and an outer circumferential part. The communication hole may extend through the lid member from the housing chamber to the central part of the bottom surface. The bottom surface may have a shape in which the center part is recessed upward with respect to the outer circumferential part. With this arrangement, since the central part of the bottom surface of the check valve provided with the communication hole is recessed upward, water droplets are less likely to flow into this part due to the action of gravity. Thus, the approach of the water droplets to the communication hole and even the ingress of water into the check valve are controlled more favorably.

The main unit may be provided with a plurality of outflow channels. The sealing member may be formed to seal the backflow of the cleaning fluid from the plurality of outflow channels to the inflow channel and to seal the flow of the cleaning fluid between the plurality of outflow channels when the cleaner device is not in operation. The plurality of outflow channels can be connected to corresponding nozzles, respectively. However, cleaning fluid (e.g., cleaning solution) that has flowed due to the cleaning operation of the cleaner system can remain in a channel connecting these nozzles when the cleaning operation is ended. Thereafter, even when the cleaner system is not in operation, external vibrations, shocks, or other factors may cause this remaining cleaning fluid to move along the channel and some of the cleaning fluid to be leaked from one of the nozzles. The sealing member is able to seal not only the backflow of the cleaning fluid from the plurality of outflow channels to the inflow channel and but also the flow of the cleaning fluid between the plurality of outflow channels when the cleaner device is not in operation. Therefore, it is possible to suppress the movement of the cleaning fluid inside the channel when the cleaner device is not in operation, thereby suppressing the accidental leakage of the cleaning fluid from the nozzle that is associated with the movement.

Another embodiment of the present invention relates to a cleaner device. The cleaner device may include: the check valve according to any one of the above embodiments; and a cleaning nozzle that is arranged to spray the cleaning fluid onto a cleaning object and is connected to the outflow channel of the check valve.

The cleaner device may be mounted on a vehicle. The cleaning object may be in-vehicle equipment.

One example not part of the present invention relates to a check valve-equipped branching tool incorporated in a cleaner device. The check valve-equipped branching tool includes: a main unit that includes an inflow channel, a first outflow channel having a first open end, and a second outflow channel having a second open end, in which cleaning fluid from the inflow channel flows into the first outflow channel from the first open end and flows into the second outflow channel from the second open end; and a sealing member that is attached to the main unit and formed to allow the flow of the cleaning fluid from the inflow channel to the first outflow channel and the second outflow channel when the cleaner device is in operation. The sealing member is formed to come into contact with the first open end and the second open end when the cleaner device is not in operation such that the sealing member seals the backflow of the cleaning fluid from the first outflow channel and the second outflow channel to the inflow channel and seals the flow of the cleaning fluid between the first outflow channel and the second outflow channel.

According to this example, the sealing member can seal not only the backflow of the cleaning fluid from the first outflow channel and the second outflow channel to the inflow channel but also the flow of the cleaning fluid between the first outflow channel and the second outflow channel by coming into contact with the first open end of the first inflow channel and the second open end of the second outflow channel when the cleaner device is not in operation. Therefore, the movement of cleaning fluid inside the channel when the cleaner device is not in operation can be suppressed.

The second open end may be arranged inward with respect to the first open end. Such an arrangement of the two open ends allows for easy division of the cleaning fluid where, when the inflow of cleaning solution into the main unit of the branching tool generates a flow of the cleaning fluid from the outside to the inside (or in the opposite direction) in the main unit, this flow is utilized to allow a portion of the flow to flow to the first outflow channel through the first open end on the outside and allow another portion of the flow to flow to the second outflow channel through the second open end on the inside.

A tapered surface whose inner diameter decreases toward an inside of the second outflow channel may be formed on the second open end, and the sealing member may come into contact with the tapered surface. This allows the inflowing cleaning fluid to be guided deep inside the second outflow channel along the tapered surface when the sealing member leaves this tapered surface during the operation of the cleaner device. Compared to a case where the tapered surface is not provided, it is easier to secure a channel between the sealing member and the second open end.

The sealing member may have a convex curved surface toward the second outflow channel, and the curved surface may come into contact with the tapered surface. With this arrangement, since the sealing member comes into contact with the second open end linearly in the circumferential direction along the second open end, the contact pressure can be increased as compared with a case where the sealing member makes contact over a wide area with the same sealing force. This leads to improved sealing performance.

The inflow channel may be arranged outward with respect to the first open end and the second open end. In this way, the inflow of the cleaning fluid from the inflow channel into the main unit of the branching tool allows for the generation of a flow of cleaning fluid from the outside to the inside within the main unit. Also, in general, the diameter increases toward the outer side from the center. Thus, a larger area is likely to be obtained toward the outer side. Therefore, the area over which the flow of cleaning fluid entering from the inflow channel acts can be widened, and the sealing by the sealing member can be thereby released during the operation of the cleaner device using a smaller inflow pressure (more specifically, the pressure increment of the inflow channel with respect to the outflow channel).

The inflow channel, the first outflow channel, and the second outflow channel may be arranged concentrically. In this way, a radial flow of the cleaning fluid can be generated in the main unit of the branching tool, and the flow can be easily guided from the inflow channel to the first outflow channel and the second outflow channel. Further, employing a shape such as a circular shape with no corners (or few corners) for contact parts between the first open end of the first outflow channel and the sealing member and between the second open end of the second outflow channel and the sealing member, i.e., the first and second sealing parts, makes it easy to realize uniform sealing performance over the entire circumference of the sealing parts.

The check valve-equipped branching tool may further include a lid member that is combined with the main unit so as to form a housing chamber for the sealing member. The lid member may have a communication hole that allows the housing chamber to communicate with an outside of the housing chamber. The lid member or the main unit may be provided with a water receiving recess arranged around the communication hole. If the movement of the sealing member associated with the operation of the cleaner device or changes in environmental temperature/humidity causes excessive pressure changes in the housing chamber for the sealing member, these pressure changes can interfere with the proper opening and closing operation of the sealing member. However, as long as the housing chamber for the sealing member communicates with the outside, the pressure changes in the housing chamber are released to the outside air, and excessive pressure changes are thus suppressed. Further, when water droplets (for example, due to condensation) enter through the communication hole, the operation of the sealing member may be hindered. However, since the water receiving recess is provided around the communicating hole, even if water droplets attached to the surface of the main unit of the branching tool or the lid member approach the communicating hole, the water droplets are blocked by being received by the water receiving recess. The ingress of water into the housing chamber, i.e., the inside of the branching tool can be inhibited.

Another example not part of the present invention relates to a cleaner device. The cleaner device may include: the check valve-equipped branching tool according to any one of the above embodiment; and at least one cleaning nozzle that is arranged to spray the cleaning fluid onto a cleaning object and is connected to at least one of the first outflow channel and the second outflow channel of the check valve-equipped branching tool.

The cleaner device may be mounted on a vehicle. The cleaning object may be in-vehicle equipment.

### [ADVANTAGEOUS EFFECTS OF INVENTION]

According to one embodiment of the present invention, the ingress of water into the inside of a check valve incorporated in a cleaner device can be suppressed. According to one embodiment of the present invention, the movement of cleaning fluid inside a channel when a cleaner device is not in operation can be suppressed.

### [BRIEF DESCRIPTION OF DRAWINGS]

FIG. 1 is a schematic diagram showing a cleaner device according to an embodiment;
FIG. 2 is a partial cutaway perspective view of a branching tool shown in FIG. 1;
FIG. 3 is a schematic diagram of an internal channel of the branching tool shown in FIG. 1;
FIG. 4 is a perspective view of the branching tool shown in FIG. 1 viewed from the lower side;
FIG. 5 is a schematic diagram showing a cleaner device according to the embodiment;
FIG. 6 is a partial cross-sectional view schematically showing a first sealing part shown in FIG. 2 in an enlarged manner;
FIG. 7 is a partial cross-sectional view schematically showing a second sealing part shown in FIG. 2 in an enlarged manner;
FIG. 8 is a schematic diagram for explaining the effect of a water receiving recess provided in the branching tool;
FIG. 9 is a perspective view of a check valve according to another embodiment viewed from the lower side; and
FIG. 10 is a longitudinal cross-sectional view of the check valve shown in FIG. 9.

### [DESCRIPTION OF EMBODIMENTS]

Hereinafter, the present invention will be described based on preferred embodiments with reference to the drawings. The embodiments do not limit the invention and are shown for illustrative purposes, and not all the features described in the embodiments and combinations thereof are necessarily essential to the invention. The same or equivalent constituting elements, members, and processes illustrated in each drawing shall be denoted by the same reference numerals, and duplicative explanations will be omitted appropriately. The scales and shapes shown in the figures are defined for convenience's sake to make the explanation easy and shall not be interpreted limitatively unless otherwise specified. Terms like "first", "second", etc., used in the specification and claims do not indicate an order or importance by any means and are used to distinguish a certain feature from the others. Some of the components in each figure may be omitted if they are not important for explanation.

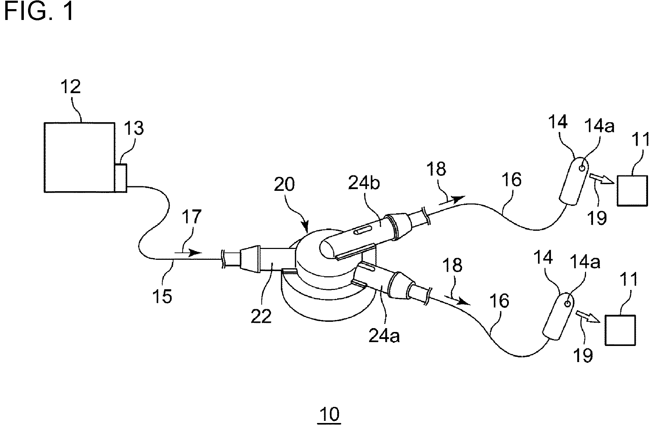

FIG. 1 is a schematic diagram showing a cleaner device 10 according to an embodiment. In this embodiment, the cleaner device 10 is a vehicle cleaner device mounted on a vehicle, such as an automobile, and is configured to clean a cleaning object 11. The cleaning object 11 may be, for example, an in-vehicle sensor such as an in-vehicle camera, or other in-vehicle equipment.

The cleaner device 10 is provided with a cleaning solution tank 12, a pump 13, a plurality of cleaning nozzles 14 (two in this example), and a branching tool 20. The branching tool 20 is provided with an inflow channel 22, a first outflow channel 24a, and a second outflow channel 24b.

The cleaning solution tank 12 is connected to the inflow channel 22 of the branching tool 20 through a supply pipe 15 such as a hose, for example. The pump 13 is provided at the outlet of the cleaning solution tank 12 or in the middle of the supply pipe 15 and sends a cleaning solution from the cleaning solution tank 12 to the branching tool 20 and then to each of the cleaning nozzles 14. The first outflow channel 24a of the branching tool 20 is connected to one of the cleaning nozzles 14 through a connection pipe 16 such as a hose, for example. The second outflow channel 24b of the branching tool 20 is connected to the other one of the cleaning nozzles 14 through another connection pipe 16. Each cleaning nozzle 14 has a jet 14a for spraying the cleaning solution onto the cleaning object 11 on the side or at the tip of the cleaning nozzle 14. The cleaning nozzles 14 are each arranged to spray the cleaning solution onto a different cleaning object 11. Alternatively, the cleaning nozzles 14 may be each arranged to spray the cleaning solution to different parts of the same cleaning object 11 or to the same part of the same cleaning object 11 from different directions.

Therefore, when the cleaner device 10 is in operation, i.e., when the cleaning operation is performed, the cleaning solution flows as schematically shown in FIG. 1 by arrows 17, 18, and 19. By the operation of the pump 13, the cleaning solution flows from the cleaning solution tank 12 to the inflow channel 22 of the branching tool 20 through the supply pipe 15. The branching tool 20 is formed to allow for the flow of the cleaning solution from the inflow channel 22 to the first outflow channel 24a and the second outflow channel 24b when the cleaner device 10 is in operation. The cleaning solution is divided into the first outflow channel 24a and the second outflow channel 24b in the branching tool 20 and flows to the cleaning nozzles 14 through the connection pipes 16, respectively. The cleaning solution is then sprayed from the jets 14a of the respective cleaning nozzles 14 onto the cleaning objects 11, and the cleaning objects 11 are cleaned at the same time.

If it is desired to clean each cleaning object 11 at a different appropriate time, each cleaning nozzle 14 may be provided with a shutter or other switching mechanism for opening and closing the jet 14a or the internal channel of the cleaning nozzle 14 connecting the jet 14a and the connection pipe 16. Such a switching mechanism may be provided in the connection pipe 16 connected to each cleaning nozzle 14 or the outflow channel of the branching tool 20. By controlling those switching mechanisms individually, the spraying of the cleaning solution can be switched on and off for each cleaning nozzle 14.

When the cleaner device 10 is not in operation, i.e., no cleaning operation is performed, the pump 13 is stopped, and, thereby, the cleaning solution from the cleaning solution tank 12 to the cleaning nozzles 14 is also stopped.

As will be described in detail later, the branching tool 20 has a check valve function. Therefore, the branching tool 20 can be considered as a check valve. The branching tool 20 is formed to seal the backflow of the cleaning solution from the first outflow channel 24a and the second outflow channel 24b to the inflow channel 22 and also seal the flow of the cleaning solution between the first outflow channel 24a and the second outflow channel 24b when the cleaner device 10 is not in operation.

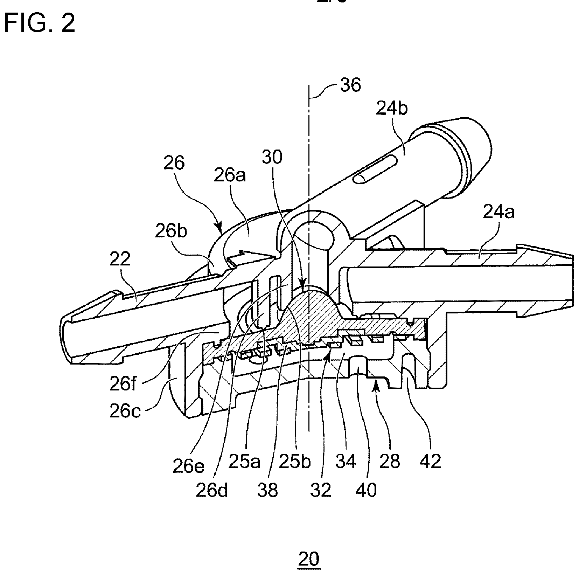

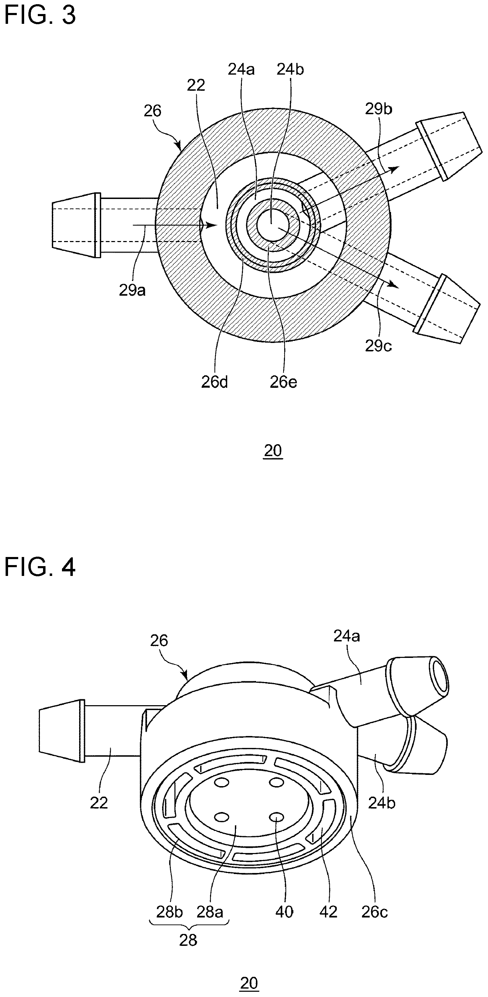

FIG. 2 is a partial cutaway perspective view of the branching tool 20. FIG. 2 shows a cross section of the branching tool 20 by a plane including a central axis 36 of the branching tool 20 and a pipe axis of the inflow channel 22 perpendicular to the central axis 36 and a cross section of the branching tool 20 by a plane that includes the central axis 36 and a pipe axis of the first outflow channel 24a perpendicular to the central axis 36. FIG. 3 is a schematic diagram of the internal channel of the branching tool 20. FIG. 3 shows the inflow channel 22, the first outflow channel 24a, and the second outflow channel 24b using a transparent view in which the branching tool 20 is viewed from below. FIG. 4 is a perspective view of the branching tool 20 viewed from the lower side.

The branching tool 20 includes a main unit 26, a lid member 28, a sealing member 30, and a biasing member 32. The inflow channel 22, the first outflow channel 24a, and the second outflow channel 24b are provided in the main unit 26. The first outflow channel 24a has a first open end 25a and the second outflow channel 24b has a second open end 25b. The lid member 28, in combination with the main unit 26, forms a cavity in the branching tool 20, and this cavity is used as a housing chamber 34 for the sealing member 30. The housing chamber 34 also houses the biasing member 32 along with the sealing member 30. The sealing member 30 prevents or minimizes the ingress of the solution into the housing chamber 34.

The sealing member 30 operates as a valve disc of the check valve. When the cleaner device 10 is not in operation, the sealing member 30 comes into contact with the first open end 25a so as to form a first sealing part and also comes into contact with the second open end 25b so as to form a second sealing part. As shown in FIG. 2, the sealing member 30 is formed to seal the backflow of the cleaning solution from the first outflow channel 24a and the second outflow channel 24b to the inflow channel 22 and also seal the flow of the cleaning solution between the first outflow channel 24a and the second outflow channel 24b by coming into contact with the first open end 25a and the second open end 25b when the cleaner device 10 is not in operation. In other words, the check valve is closed at this time.

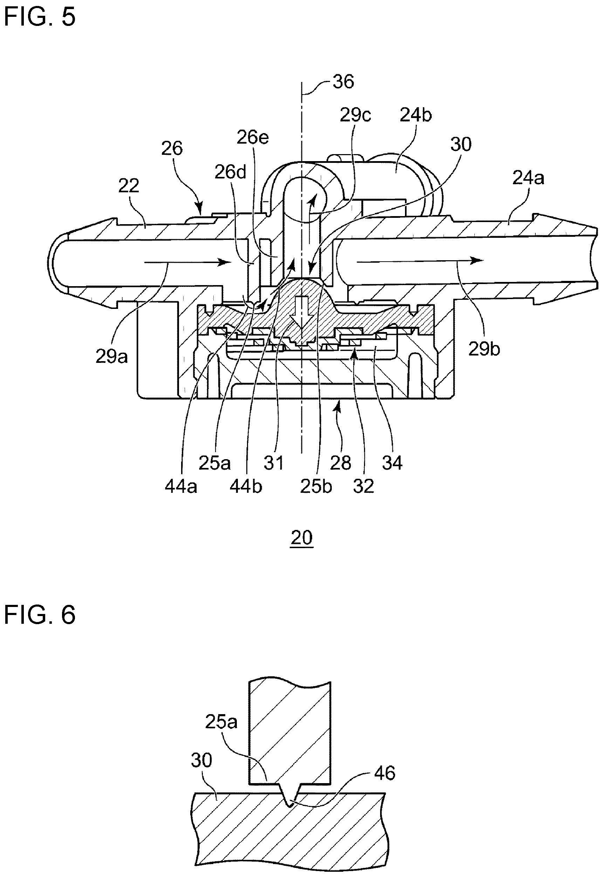

On the other hand, the sealing member 30 is formed to allow for the flow of the cleaning solution from the inflow channel 22 to the first outflow channel 24a and the second outflow channel 24b when the cleaner device 10 is in operation. This will be described later with reference to FIG. 5. The check valve is opened, and the cleaning solution from the inflow channel 22 flows from the first open end 25a into the first outflow channel 24a and flows from the second open end 25b into the second outflow channel 24b inside the main unit 26. The biasing member 32 is provided as a return spring for elastically biasing the sealing member 30 serving as the valve disc back to the original sealing position.

The main unit 26 and the lid member 28 are formed of an appropriate synthetic resin material such as, e.g., polyacetal resin, acrylic resin, polycarbonate resin, etc. The sealing member 30 may be formed of, for example, ethylene propylene diene rubber (EPDM). However, the sealing member 30 may be formed of other rubbers or waterproof soft resin materials. The biasing member 32 can be formed of an appropriate metallic material such as stainless steel, for example.

Referring to FIGS. 2 and 3, the internal channel structure of the branching tool 20 will be explained. In this embodiment, the inflow channel 22 is provided on one side with respect to the central axis 36 shown in FIG. 2, and the first outflow channel 24a and the second outflow channel 24b are provided on the other side, and the branching tool 20 forms a Y-shaped cleaning solution channel. The inflow channel 22, the first outflow channel 24a, and the second outflow channel 24b each extend along a direction perpendicular to the central axis 36, i.e., radially outward from the main unit 26.

The branching tool 20 can be installed in such a manner that the main unit 26 is facing up and the lid member 28 is facing down, as illustrated. Therefore, in the present specification, for the sake of convenience, the side closer to the main unit 26 with respect to the direction of the central axis 36 may be referred to as the upper side, upper part, top, etc., and the side closer to the lid member 28 may be referred to as the lower side, lower part, bottom, etc. However, this does not mean that the branching tool 20 must be arranged in these particular orientations. The branching tool 20 may be installed in other orientations, for example, with the main unit 26 facing downward.

The main unit 26 has a top plate 26a, an upper side wall 26b, a lower side wall 26c, a first inner wall 26d, and a second inner wall 26e, and these parts of the main unit 26 are integrally formed. Among these, the upper part of the branching tool 20 including the top plate 26a, the upper side wall 26b, the first inner wall 26d, and the second inner wall 26e is mainly formed as a channel for the cleaning solution, and the lower part of the branching tool 20 including the lower side wall 26c is formed as the housing chamber 34 for the sealing member 30 and the biasing member 32.

The top plate 26a is connected to the lower side wall 26c by the upper side wall 26b. As an example, the top plate 26a has a disk-like shape centered on the central axis 36, and the upper side wall 26b and the lower side wall 26c each have a cylindrical shape centered on the central axis 36. The lower side wall 26c has a diameter larger than that of the upper side wall 26b.

To the upper side wall 26b, the inflow channel 22 and the first outflow channel 24a are connected, and these channels are arranged at the same height. The height in this case refers to the position in the direction of the central axis 36. The second outflow channel 24b is arranged at a height different from the first outflow channel 24a, more specifically, arranged slightly upward and connected to the central part of the top plate 26a.

The first inner wall 26d and the second inner wall 26e extend downward from the top plate 26a radially inward of the upper side wall 26b. The lower end of the first inner wall 26d corresponds to the first open end 25a, and the lower end of the second inner wall 26e corresponds to the second open end 25b. The first inner wall 26d and the second inner wall 26e also have a cylindrical shape centered on the central axis 36. The first inner wall 26d has a diameter larger than that of the second inner wall 26e. In other words, the upper side wall 26b, the first inner wall 26d, and the second inner wall 26e are arranged concentrically toward the central axis 36 from the outside in the radial direction in the order stated. Therefore, the second open end 25b is arranged inward with respect to the first open end 25a, and these two open ends are arranged concentrically.

As can be understood from FIGS. 2 and 3, an upper space inside the branching tool 20 surrounded by the top plate 26a, the upper side wall 26b, and the sealing member 30 is divided by the first inner wall 26d and the second inner wall 26e, and the first open end 25a and the second open end 25b are in contact with the sealing member 30 as described above. The first inner wall 26d divides the inflow channel 22 from the first outflow channel 24a. In this way, an annular section serving as the outlet of the inflow channel 22 is formed inside the main unit 26 between the upper side wall 26b and the first inner wall 26d. Another annular section is formed between the first inner wall 26d and the second inner wall 26e as the inlet of the first outflow channel 24a. The inside of the second inner wall 26e serves as the inlet of the second outflow channel 24b.

Since the upper side wall 26b, the first inner wall 26d, and the second inner wall 26e are concentrically arranged, the outlet of the inflow channel 22, the inlet of the first outflow channel 24a, and the inlet of the second outflow channel 24b are also arranged concentrically. The inlet of the first outflow channel 24a communicates with a tubular part of the first outflow channel 24a extending from the main unit 26. The second outflow channel 24b extends upward along the central axis 36 from the inlet of the second outflow channel 24b, passes through the top plate 26a, bends at right angles, and extends in the radial direction. When the cleaner device 10 is in operation, the cleaning solution flows in the inflow channel 22, the first outflow channel 24a, and the second outflow channel 24b inside the main unit 26 as shown by arrows 29a, 29 b, and 29c in FIG. 3.

As shown in FIG. 2, the sealing member 30 has a convex curved surface in the central part of the upper surface, and the upper surface of the sealing member 30 is roughly a flat area outside the convex curved surface in the radial direction. The convex curved surface of the sealing member 30 has, for example, a hemispherical shape, and the center thereof is located on the central axis 36. The sealing member 30 comes into contact with the first open end 25a in a flat region on the outer peripheral side so as to form a first sealing part and comes into contact with the second open end 25b on the convex curved surface in the central part so as to form a second sealing part. The first and second open ends 25a and 25b each come into contact with the sealing member 30 over the entire circumference. The second open end 25b is arranged higher than the first open end 25a in order to match the shape of the sealing member 30 in the height direction (the direction of the central axis 36).

The sealing member 30 is held between the main unit 26 and the lid member 28 at the peripheral edge of the sealing member 30. The outer circumferential part of the upper surface of the sealing member 30 abuts on a step part 26f of the main unit 26 connecting the upper side wall 26b and the lower side wall 26c, and the outer circumferential part of the lower surface of the sealing member 30 abuts on the outer circumferential part of the lid member 28. The outer circumference of the sealing member 30 has a circular shape to match the inner surface shape of the lower side wall 26c of the main unit 26. The outer circumference surface of the lid member 28 and the inner circumference surface of the lower side wall 26c of the main unit 26 engage with each other, and the lid member 28 is thereby fixed to the main unit 26, and the sealing member 30 is sandwiched between the main unit 26 and the lid member 28.

The lower surface of the sealing member 30 comes into contact with the biasing member 32 and is elastically supported by the biasing member 32. A holding plate 38 may be provided between the sealing member 30 and the biasing member 32, and the sealing member 30 may be elastically supported by the biasing member 32 via the holding plate 38. The holding plate 38 may be provided adjacent to the central part of the lower surface of the sealing member 30.

The biasing member 32 has, as an example, a plurality of arms that act as springs and inner and outer circumferential parts connected by the arms. The arms extend between the inner and outer circumference parts in a meandering or spiral-like curved manner, for example. The arms and the inner and outer circumferential parts of the biasing member 32 are arranged roughly along a plane perpendicular to the central axis 36, and the inner circumferential part can be elastically displaced in the direction of the central axis 36 with respect to the outer circumferential part due to elastic deformation of the arms. Just like the sealing member 30, the outer circumference of the biasing member 32 is sandwiched and held between the main unit 26 and the lid member 28 (more specifically, between the sealing member 30 and the lid member 28). The inner circumference part of the biasing member 32 comes into contact with the lower surface of the sealing member 30 or with the holding plate 38 and elastically supports the sealing member 30.

As shown in FIG. 4, the lid member 28 has a central part 28a and an outer circumferential part 28b, which form the bottom surface of the branching tool 20. This bottom surface has a shape in which the central part 28a is recessed upward with respect to the outer circumferential part 28b.

Referring to FIG. 2 along with FIG. 4, the lid member 28 has at least one (four in this example) communication hole 40, which allows the housing chamber 34 to communicate with the outside. The communication hole 40 extends through the lid member 28 from the housing chamber 34 to the central part 28a of this bottom surface. If there is no communication hole 40 and the housing chamber 34 does not communicate with the outside, the pressure inside the housing chamber 34 can change excessively (e.g., increase) due to the movement of the sealing member 30 associated with the operation of the cleaner device 10 or changes in the environmental temperature and humidity. This pressure change can interfere with proper movement of the sealing member 30. However, in this embodiment, the pressure change can be released to the outside air through the communication hole 40, thereby allowing the pressure in the housing chamber 34 to be properly maintained.

Further, the lid member 28 is provided with a water receiving recess 42 arranged around the communication hole 40. The water receiving recess 42 extends in a groove shape around the communication hole 40. The water receiving recess 42 is formed along the outer circumferential part 28b of the lid member 28. As illustrated, the water receiving recesses 42 is formed as a plurality (e.g., six in FIG. 4) of circumferentially divided grooves but may be a continuous groove over the entire circumference. Instead of or in addition to the water receiving recess 42 provided in the lid member 28, a water receiving recess may be provided in the main unit 26, for example, in a part surrounding the lid member 28. For example, a water receiving recess may be provided on the bottom of the lower side wall 26c.

Referring to FIGS. 2, 3, and 5, the operation of the branching tool 20 will be explained now. As described above, FIG. 2 shows the branching tool 20 when the cleaner device 10 is not in operation, and the branching tool 20 serving as a check valve is closed at this time. FIG. 5 shows the branching tool 20 when the cleaner device 10 is not in operation, and the branching tool 20 serving as a check valve is open at this time.

When the cleaner device 10 is in operation, the cleaning solution first flows into an annular section just inside the upper side wall 26b, which serves as the outlet of the inflow channel 22 (arrow 29a in FIGS. 3 and 5). Due to the pressure of the cleaning solution that is flowing in, the sealing member 30 receives a downward force along the central axis 36 and is deformed or displaced downward relative to the main unit 26 (arrow 31 in FIG. 5). Along with the sealing member 30, the biasing member 32 is also deformed downward inside the housing chamber 34. As a result, as shown in FIG. 5, the sealing member 30 is separated from the first open end 25a and the second open end 25b, i.e., the branching tool 20 serving as a check valve switches from the closed state to the open state.

At this time, the cleaning solution flows from the inflow channel 22 to an annular section inside the first inner wall 26d through a gap formed between the first open end 25a and the upper surface of the sealing member 30 (arrow 44a in FIG. 5). A part of the cleaning solution that has flown in flows circumferentially around the outside of the second inner wall 26e and flows out of the main unit 26 through the first outflow channel 24a (arrow 29b in FIG. 3). The remainder of the cleaning solution that has flowed into the inner side of the first inner wall 26d flows into the inner side of the second inner wall 26e, i.e., the second outflow channel 24b through a gap formed between the second open end 25b and the top surface of the sealing member 30 (more specifically, a convex curved surface in the central part of the upper surface) and flows out of the main unit 26 (arrows 44b and 29c in FIG. 5). In this way, the cleaning solution is divided into the first outflow channel 24a and the second outflow channel 24b in the branching tool 20 and is supplied to the cleaning nozzles 14 shown in FIG. 1.

On the other hand, when the cleaner device 10 is not in operation, the inflow of the cleaning solution from the inflow channel 22 is stopped, and the pressure of the cleaning solution acting on the sealing member 30 is reduced. Due to the elastic restoring force of the sealing member 30 itself and the elastic restoring force exerted on the sealing member 30 from the biasing member 32, the sealing member 30 and the biasing member 32 are deformed or displaced upward with respect to the main unit 26. In this way, the sealing member 30 comes into contact with the first open end 25a and the second open end 25b again, the first and second sealing parts are formed again, and the branching tool 20 switches from the open state to the closed state.

At this time, the backflow of the cleaning solution remaining in the first outflow channel 24a into the inflow channel 22 is stopped by the first sealing part. Leakage of the cleaning solution from the first outflow channel 24a to the second outflow channel 24b is stopped by the second sealing part. Also, the backflow of the cleaning solution remaining in the second outflow channel 24b into the inflow channel 22 and the leakage of the cleaning solution from the second outflow channel 24b to the first outflow channel 24a are stopped by the second sealing part.

Therefore, according to the branching tool 20 of the embodiment, the sealing member 30 can seal not only the backflow of the cleaning solution from the first outflow channel 24a and the second outflow channel 24b to the inflow channel 22 but also the flow of the cleaning solution between the first outflow channel 24a and the second outflow channel 24b by coming into contact with the first open end 25a of the first outflow channel 24a and the second open end 25b of the second outflow channel 24b when the cleaner device 10 is not in operation. Therefore, it is possible to suppress the movement of the cleaning solution through the branching tool 20 when the cleaner device 10 is not in operation, especially between the plurality of cleaning nozzles 14. This can prevent or reduce the possibility of accidental leakage of cleaning solution from any of the cleaning nozzles 14 due to movement of the remaining cleaning solution caused by external vibrations, shocks, etc., even when the cleaner device is not in operation.

The second open end 25b is arranged radially inward with respect to the first open end 25a. Such an arrangement of the two open ends allows for easy division of the cleaning solution where, when the inflow of cleaning solution into the main unit 26 of the branching tool 20 from the inflow channel 22 generates a supply flow of the cleaning solution from the outside to the inside in the radial direction in the main unit 26, this flow is utilized to allow a portion of the flow to flow to the first outflow channel 24a through the first open end 25a on the outside and allow another portion of the flow to flow to the second outflow channel 24b through the second open end 25b on the inside.

The inflow channel 22 is arranged radially outward with respect to the first open end 25a and the second open end 25b. In this way, the inflow of the cleaning solution from the inflow channel 22 into the main unit 26 of the branching tool 20 allows for easy generation of a flow of cleaning solution from the outside to the inside within the main unit 26. In general, the diameter increases toward the outer side from the center. Thus, a larger area is likely to be obtained toward the outer side. Therefore, the area over which the flow of cleaning solution entering from the inflow channel 22 acts can be widened, and the sealing by the sealing member 30 can be thereby released during the operation of the cleaner device 10 using a smaller inflow pressure (more specifically, the pressure increment of the inflow channel 22 with respect to the first outflow channel 24a and the second outflow channel 24b).

The inflow channel 22, the first outflow channel 24a, and the second outflow channel 24b are arranged concentrically. In this way, a radial flow of the cleaning solution can be generated in the main unit 26 of the branching tool 20, and the flow can be easily guided from the inflow channel 22 to the first outflow channel 24a and the second outflow channel 24b. Further, employing a shape such as a circular shape with no corners (or few corners) for contact parts between the first open end 25a of the first outflow channel 24a and the sealing member 30 and between the second open end 25b of the second outflow channel 24b and the sealing member 30, i.e., the first and second sealing parts, makes it easy to realize uniform sealing performance over the entire circumference of the sealing parts.

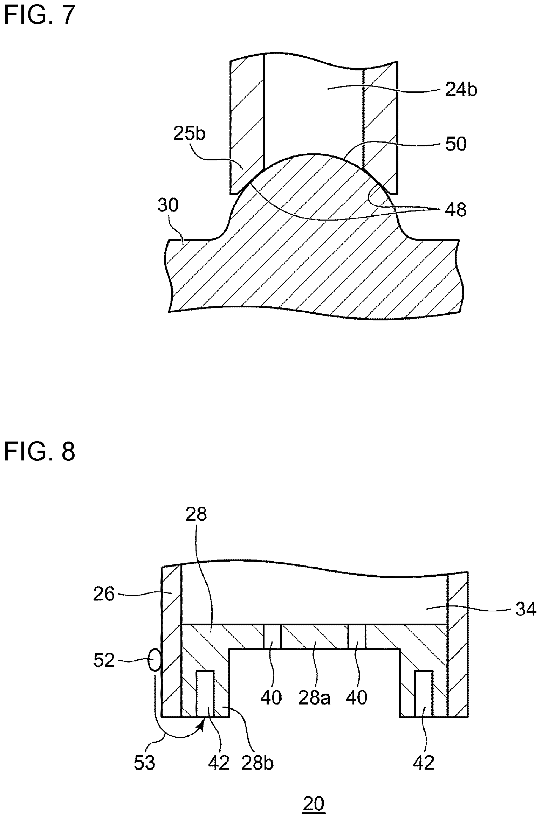

FIGS. 6 and 7 are partial cross-sectional views schematically showing the first sealing part and the second sealing part shown in FIG. 2 in an enlarged manner, respectively. As shown in FIG. 6, the first open end 25a has a protrusion 46 over the entire circumference, and the sealing member 30 has a narrow groove for receiving the protrusion 46. The first open end 25a is in contact with the sealing member 30 at the protrusion 46. In this way, by linearly limiting the contact area of the first open end 25a and the sealing member 30 and increasing the contact pressure, the sealing performance of the first sealing part can be improved. In order to achieve the same effect, a narrow groove may be formed in the first open end 25a and a protrusion may be formed in the sealing member 30 that fits into this narrow groove over the entire circumference. Such a combination of a protrusion and a narrow groove may be applied to the second sealing part.

As shown in FIG. 7, a tapered surface 48 whose inner diameter decreases toward the inside of the second outflow channel 24b is formed on the second open end 25b. The tapered surface 48 is provided around the entire circumference of the second open end 25b. The sealing member 30 has a convex curved surface 50 toward the second outflow channel 24b as described above. The sealing member 30 comes into contact with the tapered surface 48 at this convex curved surface 50. This allows the second open end 25b to be linearly in contact with the sealing member 30 in the circumferential direction at the convex curved surface 50, and the contact pressure can thus be increased compared to a case where the respective contact surfaces of the sealing member 30 and the second open end 25b are both flat surfaces and in surface contact. The increase in the contact pressure leads to an improvement in the sealing performance of the second sealing part.

The tapered surface 48 provided at the second open end 25b allows the inflowing cleaning solution to be guided deep inside the second outflow channel 24b along the tapered surface 48 when the sealing member 30 leaves this tapered surface 48 during the operation of the cleaner device 10. Compared to a case where the tapered surface 48 is not provided, it is easier to secure a channel between the sealing member 30 and the second open end 25b.

FIG. 8 is a schematic diagram for explaining the effect of a water receiving recess 42 provided in the branching tool 20. As described above, the outer circumferential part 28b of the lid member 28 of the branching tool 20 is provided with a water receiving recess 42. The water receiving recess 42 extends in a groove shape around the communication hole 40. As shown in FIG. 8, for example, a water droplet 52 may attach to the surface of the branching tool 20 during use due to condensation. As indicated by an arrow 53, even if the water droplet 52 approaches the communication hole 40, the water droplet 52 is blocked by being received in water receiving recess 42. The ingress of the water droplet 52 into the housing chamber 34, i.e., the inside of the branching tool 20, can be inhibited.

If the water droplet 52 reaches the communication hole 40, the operation of the sealing member 30 can be prevented due to the water droplet 52 blocking the communication hole 40 and preventing the housing chamber 34 from communicating with the outside air or due to the water droplet 52 entering the housing chamber 34. However, in this embodiment, since the water receiving recess 42 is provided around the communication hole 40, ingress of the water droplet 52 into the inside of the branching tool 20 and a situation where the operation of the check valve is prevented due to the ingress are unlikely to occur as described above.

The water receiving recess 42 extends in a groove shape around the communication hole 40, and almost the entire circumference of the communication hole 40 is surrounded by the water receiving recess 42. Therefore, when the water droplet 52 flows toward the communication hole 40 from the surroundings, the possibility of the water droplet 52 entering the water receiving recess 42 before reaching the communication hole 40 increases. Thus, the approach of the water droplet 52 to the communication hole 40 and even the ingress of water into the check valve are controlled more favorably.

The central part 28a of the lid member 28 is concave upwardly with respect to the outer circumferential part 28b, and the communication hole 40 extends through the lid member 28 from the housing chamber 34 to this central part 28a. Therefore, even if the water droplet 52 passes through the water receiving recess 42 toward the central part 28a of the lid member 28, it is difficult for the water droplet 52 to go around to the central part 28a due to the action of gravity. Thus, the approach of the water droplet 52 to the communication hole 40 and even the ingress of water into the check valve are controlled more favorably.

In the above embodiment, the inflow channel 22, the first outflow channel 24a, and the second outflow channel 24b of the branching tool 20 form a Y-shaped cleaning solution channel. Alternatively, the channels of the branching tool 20 may be arranged in a variety of geometrical arrangements. For example, the first outflow channel 24a and the second outflow channel 24b may not be provided on the same side of the central axis 36 but may extend toward opposite sides of the central axis 36. Alternatively, the inflow channel 22 may be connected to the central part of the branching tool 20 just like the second outflow channel 24b in the above embodiment instead of being arranged radially outward with respect to the first open end 25a and the second open end 25b.

In the above embodiment, the second open end 25b is arranged inwardly and concentrically with respect to the first open end 25a. Alternatively, other arrangements of these open ends are also possible. For example, the first open end 25a and the second open end 25b may be arranged adjacent to each other rather than one surrounding the other.

In the above embodiment, the case in which the main unit 26 of the branching tool 20 has two outflow channels is explained as an example. However, the main unit 26 may have three or more outflow channels. Therefore, the main unit of a branching tool with a check valve may have an inflow channel and a plurality of (e.g., three or more) outflow channels. In this case, the plurality of outflow channels each have an open end, and cleaning fluid from the inflow channel flows from the open end of each outflow channel into the outflow channel. A sealing member is attached to the main unit and formed to allow for the flow of the cleaning fluid from the inflow channel to the plurality of outflow channels when the cleaner device is in operation. The sealing member is formed to seal the backflow of the cleaning fluid from the plurality of outflow channels to the inflow channel and to seal the flow of the cleaning fluid between the plurality of outflow channels by coming into contact with the open end of each outflow channel when the cleaner device is not in operation.

In the above embodiment, the case in which the cleaner device 10 has one branching tool 20 is explained as an example. However, the cleaner device 10 may have a plurality of branching tools 20. In that case, an outflow channel of one branching tool 20 may be connected to an inflow channel of another branching tool 20. By connecting a plurality of branching tools 20 in this manner, more cleaning nozzles 14 can be provided in the cleaner device 10.

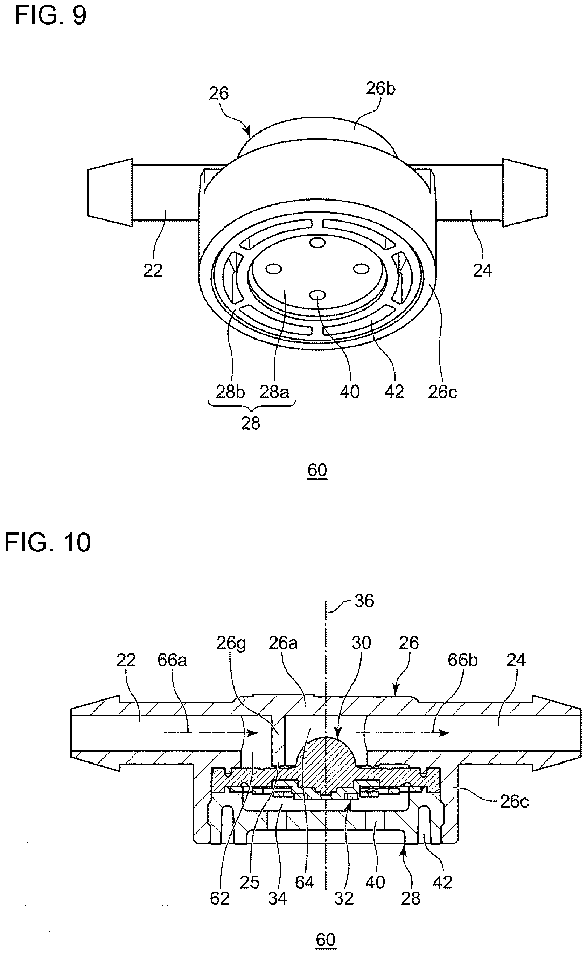

Next, with reference to FIGS. 9 and 10, a check valve 60 according to another embodiment will be explained. FIG. 9 shows a perspective view of the check valve 60 viewed from the lower side, and FIG. 10 shows a longitudinal cross-sectional view of the check valve 60. FIG. 10 shows a cross section of the check valve 60 along a plane that includes the central axis 36 of the check valve 60 and the pipe axis of the inflow channel 22 perpendicular to the central axis 36.

This check valve 60 has one inflow channel 22 and one outflow channel 24. Therefore, the check valve 60 is not formed as a branching tool for a cleaning solution. The check valve 60 can be provided in the cleaner device 10 shown in FIG. 1, for example, in the supply pipe 15, or the connection pipe 16, or both, and can be used to prevent the backflow of the cleaning solution. In this case, in the cleaner device 10, instead of the branching tool 20 described above, a branching pipe without a check valve function may be used for dividing the cleaning solution into the plurality of cleaning nozzles 14.

The check valve 60 includes a main unit 26, a lid member 28, a sealing member 30, and a biasing member 32. The main unit 26 is provided with an inflow channel 22 and an outflow channel 24 having an open end 25. Although not particularly limited, the inflow channel 22 is arranged on one side and the outflow channel 24 is arranged on the other side with respect to the central axis 36, and the inflow channel 22 and the outflow channel 24 form a cleaning solution channel extending in a straight line.

The main unit 26 has a top plate 26a, an upper side wall 26b, a lower side wall 26c, and an inner wall 26g, and these parts of the main unit 26 are integrally formed. The inner wall 26g extends downward from the top plate 26a so as to divide a top space inside the check valve 60 surrounded by the top plate 26a, the upper side wall 26b, and the sealing member 30 into two chambers. The lower end of the inner wall 26g corresponds to the open end 25. The inner wall 26g is arranged between the inflow channel 22 and the outflow channel 24 in the top space inside the check valve 60. Therefore, an outlet chamber 62 of the inflow channel 22 is formed on one side of the inner wall 26g, and an inlet chamber 64 of the outflow channel 24 is formed on the other side of the inner wall 26g. For convenience, since the same sealing member 30 (with a convex curved surface in the central part of the upper surface) as that in the branching tool 20 described above is used for the check valve 60 from the viewpoint of commonality of parts, the inner wall 26g is provided on the inflow channel 22 side, avoiding the convex curved surface of the sealing member 30.

For the lid member 28, the same parts as those in the branching tool 20 described above are also used. Therefore, the lid member 28, in combination with the main unit 26, forms a cavity in the branching tool 20, and this cavity is used as a housing chamber 34 for the sealing member 30 and the biasing member 32. The sealing member 30 and the biasing member 32 are held between the main unit 26 and the lid member 28 at the respective peripheral edges of the sealing member 30 and the biasing member 32.

Further, the lid member 28 has a central part 28a and an outer circumferential part 28b, which form the bottom surface of the branching tool 20. This bottom surface has a shape in which the central part 28a is recessed upward with respect to the outer circumferential part 28b. The lid member 28 has at least one (four in this example) communication holes 40, which allows the housing chamber 34 to communicate with the outside, and the communication hole 40 extends through the lid member 28 from the housing chamber 34 to the central part 28a of this bottom surface.

The lid member 28 is provided with a water receiving recess 42 arranged around the communication hole 40. The water receiving recess 42 extends in a groove shape around the communication hole 40. The water receiving recess 42 is formed along the outer circumferential part 28b of the lid member 28. As illustrated, the water receiving recesses 42 is formed as a plurality (e.g., six in FIG. 4) of circumferentially divided grooves but may be a continuous groove over the entire circumference. Instead of or in addition to the water receiving recess 42 provided in the lid member 28, a water receiving recess may be provided in the main unit 26, for example, in a part surrounding the lid member 28. For example, a water receiving recess may be provided on the bottom of the lower side wall 26c.

The sealing member 30 is operable as a valve disc of the check valve 60, and the sealing member 30 is formed to allow the flow of a cleaning solution from the inflow channel 22 to the outflow channel 24 by moving away from the open end 25 when the cleaner device 10 is in operation and to seal the backflow of the cleaning solution from the outflow channel 24 to the inflow channel 22 by coming into contact with the open end 25 when the cleaner device 10 is not in operation. The sealing member 30 is elastically supported by the biasing member 32, and the biasing member 32 is provided as a return spring for elastically biasing the sealing member 30 serving as the valve disc back to the original sealing position. For the biasing member 32, the same parts as those in the branching tool 20 described above are also used.

When the cleaner device 10 is in operation, the cleaning solution first flows into the outlet chamber 62 of the inflow channel 22 (arrow 66a in FIG. 10). The pressure of the inflowing cleaning solution causes the sealing member 30 to be deformed or displaced downward with respect to the main unit 26 and to move away from the open end 25, and the check valve 60 switches from a closed state to an open state. The cleaning solution flows into the inlet chamber 64 of the outflow channel 24 through a gap formed between the open end 25 and the upper surface of the sealing member 30 and flows out of the main unit 26 through the outflow channel 24 (arrow 66b in FIG. 10). Thus, the check valve 60 can allow the flow of the cleaning solution from the inflow channel 22 to the outflow channel 24.

On the other hand, when the cleaner device 10 is not in operation, the inflow of the cleaning solution from the inflow channel 22 is stopped, and the pressure of the cleaning solution acting on the sealing member 30 is reduced. Due to the elastic restoring force of the sealing member 30 itself and the elastic restoring force exerted on the sealing member 30 from the biasing member 32, the sealing member 30 and the biasing member 32 are deformed or displaced upward with respect to the main unit 26. In this way, the sealing member 30 comes into contact with the open end 25 again, and the check valve 60 switches from the open state to the closed state. Therefore, the check valve 60 can seal the backflow of the cleaning solution from the outflow channel 24 to the inflow channel 22.

Further, in the same way as in the branching tool 20 described above, the check valve 60 is provided with a water receiving recess 42 around the communication hole 40. Therefore, even when water droplets attach to the check valve 60 due to condensation, etc., the water droplets can be prevented from entering the check valve 60 through the communication hole 40.

The check valve 60 described above has one inflow channel 22. Alternatively, the check valve 60 may have a plurality of inflow channels. In that case, the check valve 60 may be formed as a confluence having a plurality of inflow channels and at least one outflow channel (e.g., one outflow channel).

In the above-mentioned embodiments, the case where the cleaning fluid is a cleaning solution is explained as an example. However, the cleaning fluid may also be a gas such as air.

Although the above-mentioned embodiments are explained using a vehicle cleaner device as an example, the cleaner device according to the embodiments of the invention is not limited to application to such specific devices. Therefore, the cleaner device according to the embodiments may, for example, be mounted on outdoor lighting equipment such as street lights, sensor equipment, or various other devices and may be used to clean various objects to be cleaned that are provided in such equipment.

The present invention is explained using specific terms based on the embodiments. However, the embodiments only show one aspect of the principle and application of the present invention, and many modifications and changes in arrangement may be made in the embodiments without departing from the scope of the present invention defined in the claims.

### [INDUSTRIAL APPLICABILITY]

The present invention can be applied to a check valve, a check valve-equipped branching tool, and a cleaner device.

### [REFERENCE SIGNS LIST]

10 cleaner device, 11 cleaning object, 14
cleaning nozzle, 20 branching tool, 22 inflow channel, 24a first outflow channel, 24b second outflow channel, 25a first open end, 25b second open end, 26
main unit, 28 lid member, 30 sealing member, 34
housing chamber, 40 communication hole, 42 water receiving recess, 48 tapered surface

## Claims

1. A check valve (20) for incorporation in a cleaner device (10), comprising:
a main unit (26) provided with an inflow channel (22) and at least one outflow channel (24a);
a sealing member (30) structured to allow a flow of cleaning fluid from the inflow channel to the outflow channel when the cleaner device is in operation and that is formed to seal a backflow of the cleaning fluid from the outflow channel to the inflow channel when the cleaner device is not in operation; and
a lid member (28) that is combined with the main unit so as to form a housing chamber (34) for the sealing member, wherein
the lid member has a communication hole (40) that allows the housing chamber to communicate with an outside of the housing chamber, wherein
the lid member or the main unit is provided with a water receiving recess (42) arranged around the communication hole,
and wherein the lid member forms a bottom surface of the check valve having a central part (28a) and an outer circumferential part (28b) while the communication hole 25 extends through the lid member from the housing chamber to the central part of the bottom surface; **characterized in that**
the bottom surface has a shape in which the central part is recessed upward with respect to the outer circumferential part.

2. The check valve according to claim 1, wherein the water receiving recess extends in a groove shape around the communication hole.

3. The check valve according to any one of claims 1 through 2, wherein
the main unit is provided with a plurality of outflow channels (24a, 24b), and
the sealing member is formed to seal the backflow of the cleaning fluid from the plurality of outflow channels to the inflow channel and to seal the flow of the cleaning fluid between the plurality of outflow channels when the cleaner device is not in operation.

4. A cleaner device comprising:
the check valve according to any one of claims 1 through 3; and
a cleaning nozzle (14) that is arranged to spray the cleaning fluid onto a cleaning object (11) and is connected to the outflow channel of the check valve.

5. The cleaner device according to claim 4, wherein the cleaner device is mounted on a vehicle, and the cleaning object is in-vehicle equipment.

## Patentansprüche

1. Rückschlagventil (20) zum Einbau in eine Reinigungsvorrichtung (10), umfassend:
eine Haupteinheit (26), die mit einem Einströmkanal (22) und mindestens einem Ausströmkanal (24a) versehen ist,
ein Dichtungsglied (30), das so strukturiert ist, dass es eine Reinigungsfluidströmung von dem Einströmkanal zu dem Ausströmkanal gestattet, wenn die Reinigungsvorrichtung in Betrieb ist, und das so ausgebildet ist, dass es einen Rückfluss des Reinigungsfluids von dem Ausströmkanal zu dem Einströmkanal abzudichten, wenn die Reinigungsvorrichtung nicht in Betrieb ist, und
ein Deckelglied (28), das mit der Haupteinheit kombiniert ist, um eine Gehäusekammer (34) für das Dichtungsglied zu bilden, wobei
das Deckelglied ein Kommunikationsloch (40) aufweist, dank dessen die Gehäusekammer mit einer Außenseite der Gehäusekammer kommunizieren kann, wobei
das Deckelglied oder die Haupteinheit mit einer Wasseraufnahmeaussparung (42) versehen ist, die um das Kommunikationsloch herum angeordnet ist,
und wobei das Deckelglied eine Bodenfläche des Rückschlagventils mit einem Mittelteil (28a) und einem äußeren Umfangsteil (28b) bildet, während sich das Kommunikationsloch durch das Deckelglied von der Gehäusekammer zu dem Mittelteil der Bodenfläche erstreckt, **dadurch gekennzeichnet, dass**
die Bodenfläche eine Form aufweist, in der das Mittelteil bezüglich des äußeren Umfangsteils nach oben ausgespart ist.

2. Rückschlagventil nach Anspruch 1, wobei sich die Wasseraufnahmeaussparung in einer Nutform um das Kommunikationsloch herum erstreckt.

3. Rückschlagventil nach einem der Ansprüche 1 bis 2, wobei
die Haupteinheit mit einer Vielzahl von Ausströmkanälen (24a, 24b) versehen ist und
das Dichtungsglied so ausgebildet ist, dass es den Rückfluss des Reinigungsfluids von der Vielzahl von Ausströmkanälen zu dem Einströmkanal abdichtet und die Strömung des Reinigungsfluids zwischen der Vielzahl von Ausströmkanälen abdichtet, wenn die Reinigungsvorrichtung nicht in Betrieb ist.

4. Reinigungsvorrichtung, umfassend:
das Rückschlagventil nach einem der Ansprüche 1 bis 3 und
eine Reinigungsdüse (14), die zum Aufsprühen des Reinigungsfluids auf ein Reinigungsobjekt (11) angeordnet und mit dem Ausströmkanal des Rückschlagventils verbunden ist.

5. Reinigungsvorrichtung nach Anspruch 4, wobei die Reinigungsvorrichtung an einem Fahrzeug montiert ist und das Reinigungsobjekt eine fahrzeuginterne Ausrüstung ist.

## Revendications

1. Clapet de non-retour (20) pour l'incorporation dans un dispositif de nettoyage (10), comprenant :
une unité principale (26) pourvue d'un canal d'entrée (22) et d'au moins un canal de sortie (24a) ;
un élément d'étanchéité (30) structuré pour permettre un écoulement de fluide de nettoyage du canal d'entrée vers le canal de sortie lorsque le dispositif de nettoyage est en fonctionnement et qui est formé pour empêcher le reflux du fluide de nettoyage du canal de sortie vers le canal d'entrée lorsque le dispositif de nettoyage n'est pas en fonctionnement ; et
un élément de couvercle (28) qui est combiné à l'unité principale de manière à former une chambre de logement (34) pour l'élément d'étanchéité, dans lequel
l'élément de couvercle a un trou de communication (40) qui permet à la chambre de logement de communiquer avec l'extérieur de la chambre de logement, dans lequel
l'élément de couvercle ou l'unité principale est pourvu(e) d'un évidement de réception d'eau (42) agencé autour du trou de communication, et dans lequel
l'élément de couvercle forme une surface inférieure du clapet de non-retour ayant une partie centrale (28a) et une partie circonférentielle externe (28b) tandis que le trou de communication s'étend à travers l'élément de couvercle depuis la chambre de logement jusqu'à la partie centrale de la surface inférieure ; **caractérisé en ce que**
la surface inférieure a une forme dans laquelle la partie centrale est en retrait vers le haut par rapport à la partie circonférentielle externe.

2. Clapet de non-retour selon la revendication 1, dans lequel l'évidement de réception d'eau s'étend en forme de rainure autour du trou de communication.

3. Clapet de non-retour selon l'une quelconque des revendications 1 et 2, dans lequel
l'unité principale est pourvue d'une pluralité de canaux de sortie (24a, 24b), et
l'élément d'étanchéité est formé pour empêcher le reflux du fluide de nettoyage depuis la pluralité de canaux de sortie vers le canal d'entrée et pour empêcher l'écoulement du fluide de nettoyage entre la pluralité de canaux de sortie lorsque le dispositif de nettoyage n'est pas en fonctionnement.

4. Dispositif de nettoyage comprenant :
le clapet de non-retour selon l'une quelconque des revendications 1 à 3 ; et
une buse de nettoyage (14) qui est agencée pour pulvériser le fluide de nettoyage sur un objet à nettoyer (11) et qui est reliée au canal de sortie du clapet de non-retour.

5. Dispositif de nettoyage selon la revendication 4, dans lequel le dispositif de nettoyage est monté sur un véhicule, et l'objet à nettoyer est un équipement embarqué.
